# EUROPEAN PATENT APPLICATION

(11) **EP 1 878 926 A1**
(43) Date of publication of application: **16.01.2008**
(21) Application number: 06116992.6
(22) Date of filing: 11.07.2006
(51) Int. Cl.: F16B 25/00, F16B 35/04

(54) **Screw assembly having a removable tip section**

(71) Applicant: Chuang, Shu-Yun, Lijhu Township Kao hsiung 821 (TW); Tseng, Yu-Sheng, Kaohsiung County 821 (TW)
(72) Inventor: Chuang, Shu-Yun, Lijhu Township Kao hsiung 821 (TW); Tseng, Yu-Sheng, Kaohsiung County 821 (TW)
(74) Representative: Viering, Hans-Martin

(57) **Abstract**

A screw assembly mainly includes a shank (41); the shank engaged a recess (415) in the shank; said recess inserted into a tip section (42), and the tip section inserted into the shank. Besides, the tip section has second threads (424), which connected to first threads (412). And the second threads (424) have the same pitch with the first threads (412) so that the first threads easily screwed into a metal objects by rotating the tip section. The second threads with the first threads rotated into the metal object smoothly so that reduces the first threads damaged, and adjusted the screw assembly by engaged a wrench (6) with the recess from underside of the metal objects.

## Description

### BACKGROUND OF THE INVENTION

### 1. Field of the Invention

The present invention relates to a screw assembly for screwing metal objects and the screw has a removable tip section.

### 2. Description of the Related Art

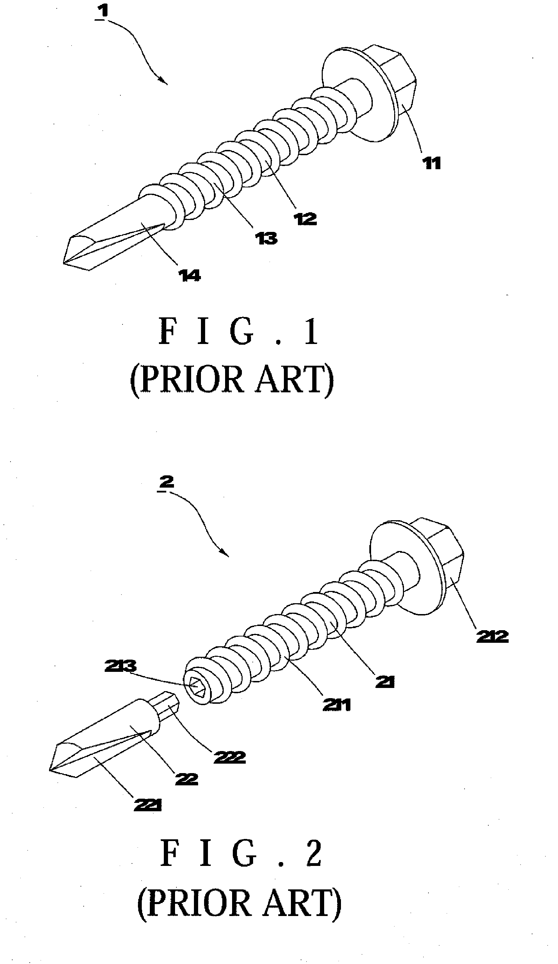

A conventional screw 1 for screwing metal objects is shown in Fig. 1 and generally includes a head 11 and a shank 12 connecting to the head 11. A plurality of threads 13 are defined in an outer periphery of the shank 12 and a tip section 14 formed on a distal end of the shank 12.At the initial of screwing, thereby the tip section 14 to first drilled on the mental object, and the threads 13 can be entrance to screw on the mental object. Besides, the screw 1 can only operated from the head 11 so that if the screw 1 is to be removed from the metal object such as a wave-shaped board on roof, the user has to climb on the roof and remove the screw 1 out from the wave-shaped board. To work on roof is dangerous to the user.

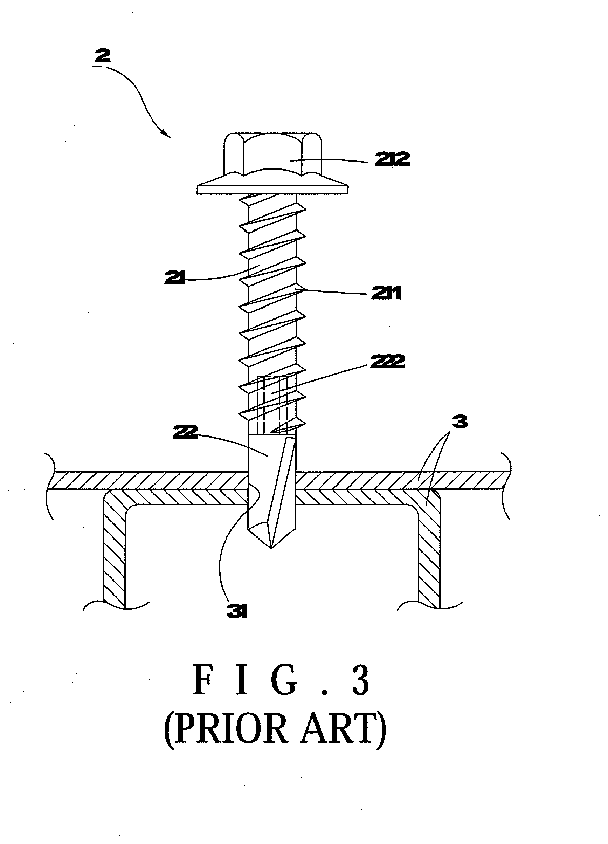

As seen in Fig. 2 and 3, a stainless steel screw is shown a screw 2 includes a head 212 and a stainless made shank 21 connecting with the head 212. A plurality of threads 211 defined in an outer periphery of the shank 21 and a polygonal recess 213 is defined in a distal end of the shank 21. A tip section 22 is made of steel and includes a groove 221 and an insertion 222 is engaged with the polygonal recess 213. While rotating the screw 2, the tip section 22 is connected to the shank 21 by inserting the insertion 222 with the polygonal recess 213; by rotating a hole into the metal objects 3 by the tip section 22, and by means of a plurality of threads 211 spirally disposed in the shank 21 which threaded into the metal obj ects 3 gradually. Besides, the tip section 22 can then be removed from the shank 21 if necessary. However, the tip section 22 can only bore a plain hole so that the user has to carefully engage the threads 211 with the hole to continuously rotate the shank 21 through hole. Moreover, the threads 211 are made of soft materials, so the threads 211 are difficult to thread into the object.

### SUMMARY OF THE INVENTION

Therefore, the present invention intends to provide a screw assembly, more particular, screwing into metal objects efficiently and has a removable tip section.

The present invention relates to a screw assembly comprising a head with a shank, and a head is connected to a first end of the shank, wherein first threads defined in an outer periphery of the shank and a recess defined in a second end of the shank. A tip section has a tip at a first end thereof and a groove is defined in an outer periphery of the tip section. An insertion extends axially from a second end of the tip section and is removable inserted into the recess. Second threads defined in an outer periphery of the tip section and located close to the second end of the tip section. The first threads have the same pitch with the second threads. During rotating and use, by means of the tip section threaded a hole into the metal object; and the second threads and the first threads rotate into the metal object smoothly so that reduces the first threads damage. Besides, the tip section can be removed from the recess if necessary that use wrench to rotate inner of the recess without rotation the head.

### BRIEF DESCRIPTION OF THE DRAWINGS

The accompanying drawing is included to provide a further understanding of the invention, and is incorporated in and constitutes a part of this specification. The drawing illustrates an embodiment of the invention and, together with the description, serves to explain the principles of the invention. In the drawing,
Fig. 1 is a perspective view to show a conventional screw;
Fig. 2 is an exploded view to show another conventional screw;
Fig. 3 shows the screw in Fig. 2 screws through two metal objects;
Fig. 4 is an exploded view to show the screw assembly of the present invention, and
Fig. 5 shows that a wrench is engaged with the recess of the screw assembly while the tip section is removed from the recess.

### DETAILED DESCRIPTION OF THE PREFERRED EMBODIMENTS

Wherever possible, the same reference numbers are used in the drawings and the description to refer to the same or like parts.

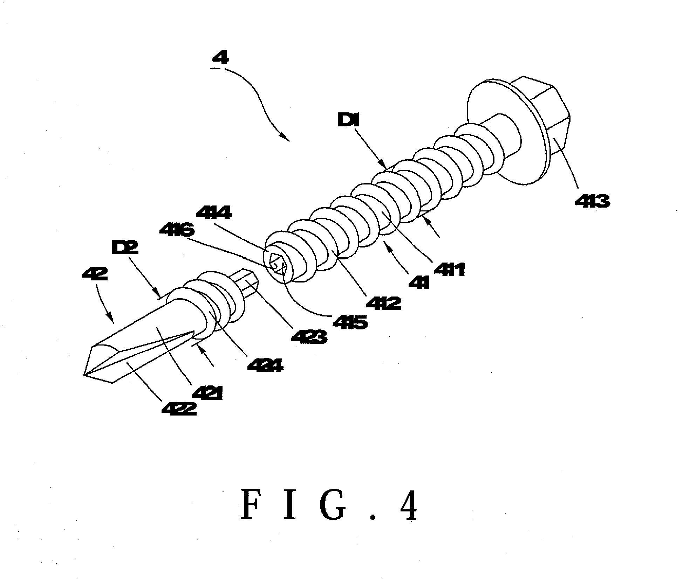

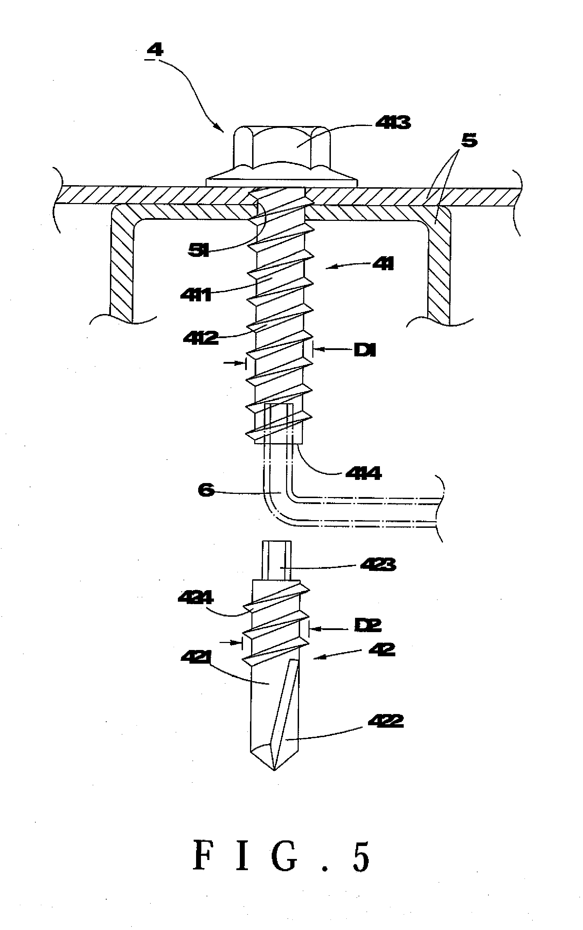

Referring to Figs. 4 and 5, the screw assembly 4 of the present invention comprises a shank 41 which is a cylindrical shank body 411, and a head 413 is connected to a first end of the shank body 411 and a recess 415 defined in a second end 414 of the shank body 411. The recess 415 includes a polygonal inner periphery 416; First threads 412 defined in an outer periphery of the shank body 411, and a tip section 42 is a cylindrical body 421 which has a tip at a first end thereof and a groove 422 defined in an outer periphery of the cylindrical body 421. The shank 41 and the tip section 42 are made of two different types of material, for example, the shank 41 is made of stainless steel and the tip section 42 is made of carbon steel. A polygonal insertion 423 extends axially from a second end of the tip section 42 and is removable inserted into the recess 415. Second threads 424 are defined in an outer periphery of the cylindrical body 421 and located close to the second end of the cylindrical body 421. The first threads 412 have the same pitch with the second threads424. An outer diameter of the first threads "D 1"is larger than an outer diameter of the second threads" D 2". When the insertion 423 is engaged with the recess 415, the first threads 412 and the second threads 424 are matched to form continuous threads.

The metal objects 5 are first drilled by the tip section 42 meanwhile, debris can be removed from the groove 422. The second threads 424 drills into the inner periphery of the hole of the metal objects 5, and the first threads 412 are continuously engaged with the threaded inner periphery of the hole into the metal objects 5 till the head 413 is in contact with the surface of one of the metal objects 5. Due to the first and second threads412, 424 have the same pitches, so that the shank 41 easily threaded into the hole of metal object. The tip section 42 can be removed from the shank 41 and a wrench 6 is engaged with the recess 415 to adjust the shank 41. In other words, the user does not have to climbup to the floor to operate the screw assembly 4; users can simply use the wrench 6 to rotate the shank 41 under the roof which is composed of the two metal objects 5. The second teeth 424 are made by high degree of stiffness material so that the second teeth 424 do not be damaged when screwing through into the metal objects 5. The first threads 412 easily screwed into the metal objects 5 by the second threads 424.Afterwards, the user can conveniently use a wrench to adjust the screw assembly 4 by engaging the wrench 6 with the recess 415 from underside of the metal objects 5 if desire.

While we have shown and described the embodiment in accordance with the present invention, it should be clear to those skilled in the art that further embodiments may be made without departing from the scope of the present invention.

## Claims

1. A screw assembly comprising:
A shank having a cylindrical shank body and a head connected to a first end of the shank body, wherein the shank body and the tip portion is made of different materials. Furthermore, the first thread section is defined in an outer periphery of the shank body; a head and a second end respective defined in two ends of the shank, wherein the second end is defined with a recess. A tip section having a cylindrical body, a tip portion at a first end thereof and a groove defined in an outer periphery of the cylindrical body; an insertion extending axially from a second end of the tip portion and removable inserted into the said recess; the second thread section is defined in an outer periphery of the cylindrical body and located close to the second end of the cylindrical body, wherein the first thread has the same pitch as the second thread.

2. Screw as claimed in claim 1, wherein the recess defined in the second end, which is formed with a polygonal plan groove. The second end of the tip portion is formed a polygonal pillar so as to inserted into the recess.

3. Screw as claimed in claim 1, wherein an outer diameter of the first thread is larger than an outer diameter of the second tread.
